# FASCICULE DE BREVET EUROPEEN

(11) **EP 2 656 008 B1**
(45) Date de publication et mention de la délivrance du brevet: **20.07.2016**
(21) Numéro de dépôt: 11785084.2
(22) Date de dépôt: 20.10.2011
(51) Int. Cl.: G01C 21/36

(54) **DISPOSITIF ET PROCÉDÉ DE NAVIGATION AVEC CARTOGRAPHIE TRAITÉE EN MODES MULTIPLES**
NAVIGATIONSVORRICHTUNG UND VERFAHREN MIT KARTENVERARBEITUNG IN MEHREREN BETRIEBSARTEN
NAVIGATION DEVICE AND METHOD WITH MAPPING PROCESSED IN MULTIPLE MODES

(30) Priorité: 23.12.2010 FR 1005066
(43) Date de publication de la demande: 30.10.2013
(73) Titulaire: Michelin Travel Partner, 92100 Boulogne-Billancourt (FR)
(72) Inventeur: HAYOT, Pierre, F-63040 Clermont -Ferrand Cedex 9 (FR)
(74) Mandataire: Bauvir, Jacques
(86) Numéro de dépôt international: PCT/IB2011/002492
(87) Numéro de publication internationale: WO 2012/085629

(56) Documents cités:
- FR-A1- 2 904 107
- US-A1- 2010 023 255

## Description

### DOMAINE TECHNIQUE DE L'INVENTION

La présente invention concerne un dispositif et un procédé de navigation. Elle concerne plus particulièrement un procédé de navigation permettant de traiter les données informatisées d'un itinéraire selon une pluralité de modes de guidage. Elle concerne également un dispositif de navigation correspondant.

### ETAT DE LA TECHNIQUE ANTERIEURE

Les dispositifs permettant d'effectuer des calculs d'itinéraires et d'assurer le guidage d'un véhicule lors du parcours le long de cet itinéraire sont de plus en plus courants. En fonction de la gamme de produit, diverses techniques sont mises en oeuvre afin de rendre le guidage le plus ergonomique et le plus sécuritaire possible. Une des fonctionnalités techniques le plus répandues consiste à présenter la position du véhicule sur une portion restreinte de l'itinéraire global. Le conducteur peut alors bien se situer dans l'environnement immédiat. Diverses informations complémentaires sont souvent présentées en plus, telles que la distance restante jusqu'à l'arrivée, le temps de parcours estimé, la distance jusqu'à la prochaine manoeuvre, etc. Ces informations sont présentées selon des formats numériques, symboliques, ou textuels. Les éléments fournis au conducteur sont le plus souvent insuffisants pour lui permettre d'avoir une bonne connaissance à la fois de l'environnement immédiat et des étapes à venir. Les procédés et dispositifs actuels ne fournissent des données physiques que sur un seul type d'information à la fois. Soit les données géographiques et physiques fournies sont purement locales, soit elles sont plus globales, comme par exemples avec une vue sur l'ensemble de l'itinéraire, avec dans ce dernier cas un déficit d'informations sur l'environnement immédiat. Le document US2010023255 présente un appareil de navigation, affichant une carte autour d'une position actuelle en une pluralité de modes d'affichage. Les données de la carte sont stockées dans une unité de stockage. Le document FR2904107 décrit un procédé de guidage pour véhicule routier, permettant de représenter sur un moyen d'affichage au moins une portion active d'itinéraire ainsi que la position dudit véhicule.

Il y a donc une carence dans les produits et procédés actuels pour produire des interfaces permettant d'associer à la fois des informations visuelles sur l'environnement immédiat et sur un zone beaucoup plus large, de façon à permettre au conducteur d'anticiper les manoeuvres à venir et de bien connaître la situation générale par rapport à l'itinéraire à suivre.

Ceci ne facilite pas la prise de décision face à des événements imprévus : accidents, bouchons, travaux, manifestations, etc. Cela ne facilite pas non plus l'éventuel choix de suivre un itinéraire plus approprié ou simplement mieux connu par l'utilisateur. Dans les dispositifs de navigation mobiles, qui sont la plupart du temps munis d'écrans de sensiblement petite dimension, la mise à disposition de plusieurs de ces fonctions est incompatible avec la taille de l'écran.

Par ailleurs, de manière générale, les procédés existants sont peu ergonomiques et sont généralement gourmands en capacité mémoire.

Pour pallier ces différents inconvénients, l'invention prévoit différents moyens techniques.

### EXPOSE DE L'INVENTION

Tout d'abord, un premier objet de l'invention consiste à prévoir un procédé de navigation permettant à l'utilisateur de pouvoir choisir entre différents niveaux de détails, ou différentes échelles de navigation.

Un autre objet de l'invention consiste à prévoir un procédé de navigation avec une ergonomie optimisée, facilitant la compréhension de l'itinéraire et son suivi sur la route, en toute sécurité.

Encore un autre objet de l'invention consiste à prévoir un dispositif de navigation, simple, peu coûteux et offrant une grande souplesse d'utilisation.

Pour ce faire, l'invention prévoit un procédé de navigation pour dispositif de navigation mobile, permettant d'effectuer une navigation le long d'un itinéraire comportant un point de départ, un point d'arrivée et une pluralité de manoeuvres, comportant les étapes suivantes :
- recevoir les données informatisées d'un itinéraire à effectuer avec les tronçons correspondants ;
- obtenir les données informatisées des manoeuvres à effectuer le long de l'itinéraire;
- obtenir les données informatisées des instructions correspondant aux manoeuvres;
- obtenir les données informatisées de position actuelle de l'objet guidé ;
- mettre en relation les données informatisées de position actuelle de l'objet guidé par rapport aux données cartographiques routières informatisées concernant l'itinéraire ;
les données informatisées de l'itinéraire étant traitées, à l'aide d'un module d'adaptation, selon une pluralité de modes de guidage :
- un mode navigation, apte à générer une représentation cartographique routière visuelle d'un secteur actif comportant au moins le tronçon actif, une représentation de l'objet guidé effectuant l'itinéraire, et une éventuelle manoeuvre en cours ou à proximité immédiate ;
- un mode cartographique, apte à générer une représentation cartographique routière des éléments d'itinéraire fournis avec une zone tampon et mise en évidence de l'itinéraire, une représentation de l'objet guidé effectuant l'itinéraire ;
- un mode instructions écrites, permettant de fournir une instruction écrite de guidage pour une manoeuvre en cours et/ou une prochaine manoeuvre ;
le procédé comportant par ailleurs les étapes consistant à :
- effectuer, à l'aide d'un module de guidage, un guidage le long de l'itinéraire en référence avec l'un des modes de guidage prétraités et mettre en attente les autres modes de guidage prétraités ;
- permettre une activation sensiblement immédiate des modes de guidage prétraités mis en attente,
- comportant également une étape d'extraction de l'itinéraire du reste des données cartographiques permettant, pour le mode navigation, de conserver uniquement les tronçons identifiés pour la réalisation de l'itinéraire ;
et, en mode cartographique, la reproduction cartographique comprenant une mise en évidence de l'itinéraire ;
et le mode instructions comportant des instructions schématiques montrant à l'aide de graphes explicatifs les manoeuvres en cours et/ou à venir, les graphes formant une représentation schématique expliquant la construction géométrique détaillée du point d'instruction (PI) concerné.

L'objet guidé, par exemple un véhicule, se trouve soit en train de parcourir l'itinéraire prévu, soit simulé.

En plus de permettre de fournir les instructions de navigation servant à poursuivre l'itinéraire amorcé ou à récupérer un itinéraire dont on s'est écarté, le mode navigation et le mode cartographique permettent par ailleurs de localiser l'objet guidé sur les représentations cartographiques routières. De façon similaire, pour le mode instructions, le fait de connaître la position de l'objet guidé permet d'identifier ou de générer au moins une manoeuvre et/ou instruction suivante servant à poursuivre l'itinéraire amorcé ou à récupérer un itinéraire dont on s'est écarté.

Grâce à ces caractéristiques, le procédé permet la compréhension à la fois globale et détaillée d'un itinéraire. Le passage d'un mode à l'autre est rapide et facile à commander par l'utilisateur. Un éventuel module de sélection permet de piloter et gérer les transitions.

Le procédé confère une très grande souplesse pour l'agencement, notamment l'orientation des manoeuvres sur le support d'affichage. La lecture et la compréhension de l'itinéraire sont grandement facilitées.

Selon un mode de réalisation avantageux, le secteur actif reproduit virtuellement la mobilité du véhicule dans son environnement immédiat. Cet aspect est important puisqu'il place l'utilisateur dans un contexte très réaliste, en fonction de son déplacement tel qu'il se réalise sur la route.

De manière avantageuse, le mode navigation comporte également une représentation cartographique visuelle de l'environnement immédiat dans lequel se trouve l'objet guidé, à savoir l'espace autour du secteur actif et du tronçon actif, permettant à l'utilisateur de situer ou reconnaître l'environnement immédiat dans lequel il circule.

Selon un mode de réalisation avantageux, la représentation schématique comporte uniquement les tronçons identifiés pour la réalisation de l'itinéraire. L'extraction de l'itinéraire du reste des éléments cartographiques confère une liberté totale de représentation des segments, tant du point de vue dimensionnel qu'angulaire.

Selon un mode de réalisation avantageux, les données informatisées de la position de l'objet guidé le long de l'itinéraire sont fournies par un système de géolocalisation, comme par exemple par GPS, par capteurs par ou téléphonie cellulaire.

Selon un autre mode de réalisation avantageux, les données informatisées de la position de l'objet guidé le long de l'itinéraire sont fournies par simulation, (par exemple par un mode de simulation automatique ou manuel avec défilement par glissement du doigt de l'utilisateur sur un écran tactile adapté).

De manière avantageuse, le procédé comporte des étapes consistant à :
- déterminer les données informatiques des manoeuvres permettant d'effectuer l'itinéraire ;
- déterminer les données informatiques d'instructions correspondant aux manoeuvres à effectuer ;
qui sont effectuées en amont du procédé. Elles peuvent être mises en oeuvre par le même dispositif de guidage ou par un dispositif séparé, à proximité ou à distance.

Selon un mode de réalisation avantageux, si ces opérations ne peuvent pas être effectuées de façon préalable par le dispositif de guidage ou par un dispositif externe, le procédé comprend les étapes permettant de déterminer les données informatiques des manoeuvres permettant d'effectuer l'itinéraire et pour obtenir les données d'instructions correspondant aux manoeuvres à effectuer.

Selon un mode de réalisation avantageux, la représentation partielle de l'itinéraire correspondant à la portion active est représentée en perspective.

Selon un autre mode de réalisation avantageux, la représentation du mode cartographique comporte une vue en deux dimensions de la zone géographique concernée.

L'invention prévoit également un dispositif de navigation comportant au moins un microprocesseur et au moins une mémoire de travail, et comprenant par ailleurs :
- un module d'itinéraire, permettant de déterminer, à l'aide de données cartographiques informatisées, un itinéraire entre un point de départ et un point d'arrivée;
- un module de guidage, permettant de déterminer, à l'aide de données informatisées concernant la position de l'objet guidé et de données cartographiques informatisées concernant l'itinéraire prévu, au moins une instruction ou manoeuvre permettant à l'utilisateur d'être guidé le long de l'itinéraire ;
- un module d'affichage, permettant d'afficher une représentation visuelle selon le mode de guidage sélectionné par l'utilisateur ;
- un module d'adaptation, permettant de traiter les données cartographiques informatisées de l'itinéraire à effectuer en vue de les adapter à une pluralité de modes de guidage susceptibles d'être utilisés ;
le module d'adaptation comportant:
- un module de mode navigation, pour effectuer le traitement des données cartographiques informatisées en vue de générer et de mettre à disposition de l'utilisateur un mode navigation, apte à générer une représentation cartographique routière visuelle d'un secteur actif comportant le tronçon actif, une représentation de l'objet guidé effectuant l'itinéraire, et une éventuelle manoeuvre en cours ou à proximité immédiate ;
- un module de mode cartographique, pour effectuer le traitement des données cartographiques informatisées en vue de générer et de mettre à disposition de l'utilisateur un mode cartographique, apte à générer une représentation cartographique routière des éléments d'itinéraire fournis avec une zone tampon et mise en évidence de l'itinéraire, une représentation de l'objet guidé effectuant l'itinéraire;
- et un module de mode instructions, pour effectuer le traitement des données cartographiques informatisées en vue de générer et de mettre à disposition de l'utilisateur un mode instructions comportant des instructions schématiques montrant à l'aide de graphes explicatifs les manoeuvres en cours et/ou à venir, les graphes formant une représentation schématique expliquant la construction géométrique détaillée du point d'instruction (PI) concerné.

Un éventuel module de sélection permet de piloter et gérer les transitions. Un tel module permet à l'utilisateur de sélectionner le mode de guidage de son choix. Les trois modes étant préparés sensiblement en parallèle, les transitions d'un mode à l'autre peuvent être effectuées sans étapes lourdes de recalcul pendant lesquelles l'utilisateur est livré à lui-même, sans obtenir de données.

Dans une variante de réalisation, le module de guidage comporte un module de géolocalisation, permettant d'obtenir les données informatisées de la position de l'objet guidé et un module d'appariement, permettant de reporter cette position sur la représentation cartographique routière, par exemple en mode navigation ou en mode cartographique, selon le cas.

Selon encore une autre variante, le module de guidage comporte un module de simulation, permettant de simuler le déplacement de l'objet guidé le long de l'itinéraire.

Selon encore un mode de réalisation avantageux, le module d'itinéraire comprend :
- un module de calcul d'itinéraire, pour déterminer, à l'aide de données cartographiques informatisées, un itinéraire permettant de se déplacer entre un point de départ et un point d'arrivée ;
- un module de détection de manoeuvre, pour déterminer, à l'aide de données cartographiques informatisées concernant l'itinéraire prévu, les manoeuvres à effectuer pour parcourir l'itinéraire ;
- un module de déterminations d'instructions pour fournir les instructions correspondant à chacune des manoeuvres.

### DESCRIPTION DES FIGURES

Tous les détails de réalisation sont donnés dans la description qui suit, complétée par les figures 1 à 7, présentées uniquement à des fins d'exemples non limitatifs, et dans lesquelles :
- la figure 1 est une représentation schématique d'un dispositif de navigation selon l'invention ;
- les figures 2A et 2B sont des représentations schématiques complémentaires du dispositif de navigation la figure 1 ;
- la figure 3 est une autre représentation schématique du dispositif de navigation, montrant un environnement de travail délocalisé ;
- la figure 4 est un organigramme fonctionnel illustrant les principales étapes d'un procédé de navigation selon l'invention ;
- les figures 5A, 5B et 5C sont des exemples de divers modes de guidage selon l'invention utilisés avec des dispositifs de navigation en format paysage ;
- les figures 6A, 6B, 6C et 6D sont des exemples de divers modes de guidage selon l'invention utilisés avec des dispositifs de navigation en format portrait ;
- la figure 7 montre un autre exemple de mode de guidage selon l'invention en format portrait.

### DESCRIPTION DETAILLEE DE L'INVENTION

Dans la présente description, les termes suivants sont utilisés notamment avec les significations suivantes :

On désigne « noeud » un point d'intersection entre un premier élément de réseau cartographique ou routier (ou autre réseau) et un second élément d'un tel réseau, notamment l'intersection entre une pluralité de voies routières. Un noeud désigne également un point de changement physique ou qualitatif d'un tronçon, comme par exemple un passage de deux à trois voies, un changement de la limitation de vitesse, une zone (même temporaire) faisant l'objet de travaux, un point de rupture tel une frontière, etc.

On désigne « tronçon » une portion de voie entre deux noeuds.

On désigne « carrefour » une intersection de plusieurs routes au même niveau.

On désigne un « itinéraire » un sous-ensemble de points issus des éléments informatisés de modélisation d'un réseau routier, créant un lien entre des données de façon à leur permettre de modéliser ou représenter un trajet ou parcours sur ledit réseau routier permettant de relier un point de départ et un point d'arrivée. Ce sous-ensemble est constitué par les données informatisées relatives aux tronçons permettant de relier le départ et l'arrivée. Par données relatives aux tronçons, on entend les données d'identifications, les données des longueurs des tronçons et les données relatives aux coordonnées spatiales.

Ce sous-ensemble de points peut servir à représenter ledit itinéraire sous différentes formes, par exemple au moyen d'une représentation graphique, de préférence sous la forme d'une carte comprenant le point de départ, le point d'arrivée, et les tronçons formant ledit itinéraire, ou sous la forme d'une « feuille de route » ou liste d'instructions, comportant une énumération ou suite d'instructions écrites ou représentées par des pictogrammes, expliquant à un éventuel conducteur d'un véhicule, les différentes étapes à suivre pour effectuer ledit itinéraire.

Un itinéraire peut être généré de façon classique, à l'aide d'un calculateur d'itinéraire, qui permet d'obtenir, pour un point de départ et un point d'arrivée donnés, un trajet routier reliant ces deux points. De façon classique, différents critères peuvent être utilisés pour favoriser un type d'itinéraire, par exemple autoroutier, par rapport à un ou plusieurs autres. Pour que l'utilisateur puisse facilement parcourir l'itinéraire, ce dernier comporte en général une série de points d'instructions ou de guidage, auxquels sont associées des instructions concernant les actions à effectuer à ces différents endroits afin de pouvoir suivre l'itinéraire prévu. Par exemple, tourner à gauche, prendre la voie de droite, etc. Dès qu'une manoeuvre doit être effectuée par le conducteur pour suivre l'itinéraire, un point d'instruction est de préférence prévu. Ainsi, un itinéraire donné peut comporter plusieurs dizaines de points d'instruction PI.

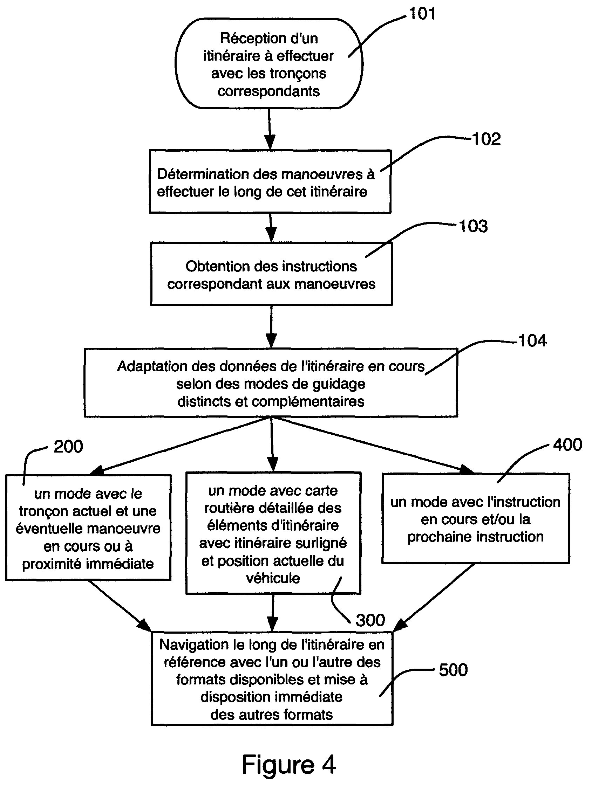

La figure 4 présente un organigramme simplifié illustrant les principes fondamentaux de l'invention. Il est très utile de connaître la position du véhicule PV par rapport à l'itinéraire à effectuer. Cette opération peut être effectuée à l'aide de différents moyens connus, tels des capteurs, gyroscopes, ou autres, mais de préférence à l'aide d'un système de géolocalisation comme par exemple un système GPS (« Global Positioning System »). Un tel système permet de connaître en tout temps la position réelle du véhicule.

A partir de cette position, de la direction suivie par le véhicule et des données de l'itinéraire à effectuer, le prochain point d'instruction (PI-next) peut être identifié.

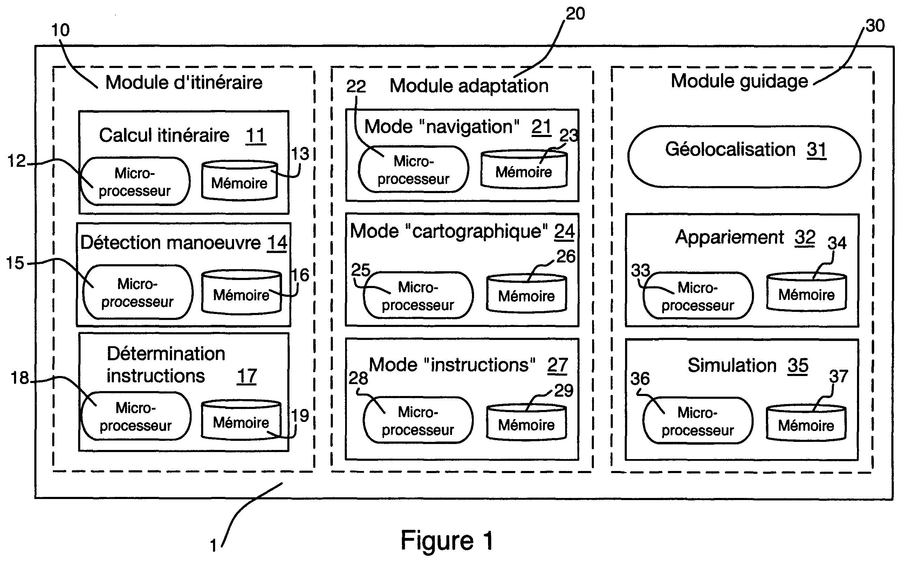

La figure 1 présente un exemple d'un mode de réalisation d'un dispositif de navigation 1 conforme à l'invention. On retrouve d'une part un module d'itinéraire 10, prévu pour générer toutes les données en relation avec l'itinéraire pour lequel une carte doit être produite. Le module d'itinéraire 10 comporte un module de calcul d'itinéraire 11, pourvu de moyens de calculs tel qu'un microprocesseur 12 et d'une mémoire de travail 13, un module de détection de manoeuvre 14, pourvu de moyens de calculs tel qu'un microprocesseur 15 et d'une mémoire de travail 16, et d'un module de détermination d'instruction 17, pourvu de moyens de calculs tel qu'un microprocesseur 18 et d'une mémoire de travail 19. Selon diverses variantes de réalisation, les moyens de calculs 12, 15 et 18, tout comme les mémoires de travail 13, 16 et 19 peuvent être centralisés pour tous les modules ou tout le système de génération de carte d'itinéraire, ou encore être agencés de façon externe, avec connexion aux différents modules.

Le module de calcul d'itinéraire 11 fonctionne de façon connue en soit, à l'aide d'un algorithme de détermination du plus court chemin entre deux points, tel que Dijkstra ou autre. Un tel algorithme permet, à l'aide d'un microprocesseur et des instructions requises, d'effectuer l'exploration d'un très grand nombre de possibilités, (de quelques dizaines ou centaines pour des zones à faibles densité et/ou pour des itinéraires courts à quelques centaines de milliers, voire plus, pour des zones à forte densité de routes et/ou pour des itinéraires longs) dans le but d'élire un itinéraire optimal en fonction de critères donnés, tels que l'itinéraire le plus court, ou le plus rapide, etc.

Une fois l'itinéraire connu, un module de détection de manoeuvre 14 permet de détecter les manoeuvres à effectuer le long de l'itinéraire en question. Par manoeuvre, on entend principalement un action de conduite d'un véhicule permettant de sélectionner un tronçon donné lorsque le conducteur se trouve face à une possibilité d'engager son véhicule vers une pluralité de tronçons (au moins deux). Le conducteur se trouve face à de multiples possibilités de poursuivre sa route, et une manoeuvre lui permet d'engager son véhicule en fonction de la direction prévue par l'itinéraire préétabli. Ainsi, le module 14 effectue un parcours virtuel de l'itinéraire établi par le module 11, et identifie les points ou noeuds où des tronçons multiples sont rattachés. Il peut s'agir d'intersection de routes, de sortie ou d'entrée sur autoroutes, et bifurcations, etc. Les manoeuvres sont déterminées de façon connues en soit. Pour un rond-point, il est entendu qu'une pluralité de manoeuvres simples sont en général impliquées, depuis l'entrée sur le rond-point, puis au passage de chaque sortie, impliquant à chaque fois une manoeuvre consistant soit à rester dans le rond-point, soit à en sortir, jusqu'à la sortie effective du rond-point. Dans le présent document, les ronds-points sont considérés comme une seule manoeuvre, du type « prendre la 3^{e} sortie », consistant en fait à une manoeuvre complexe, telle qu'évoquée précédemment.

Le module 17 de détermination d'instructions effectue les associations de données entre les manoeuvres d'une part, détectées par le module de détection de manoeuvre 14, et d'autre part, les données routières de l'itinéraires, de façon à définir des instructions sous forme de données écrites ou schématiques, permettant au conducteur de prendre connaissance des données usuelles telles que les noms ou numéros de route, les directions à suivre, les repères, les distances à parcourir, et des données relatives aux manoeuvres à effectuer, tel que tourner à gauche ou à droite, prendre la x^{e} sortie, continuer tout droit, etc.

Grâce aux modules de détection de manoeuvre 14 et de détermination d'instructions 17, on peut obtenir des couples de données, ou données appariées, avec d'une part, des données relatives à une manoeuvre à afficher sous forme d'un schéma, et d'autre part, des données relatives aux instructions écrites permettant d'effectuer la manoeuvre correspondante.

Selon les cas et les applications prévues, les manoeuvres et instructions peuvent être déterminées avant la navigation, ou encore en temps réel, pendant une navigation réelle ou simulée. Par exemple, lors d'une navigation, alors que le véhicule se déplace, si le véhicule dévie de l'itinéraire prévu, les instructions et manoeuvres sont déterminées en temps réel, pendant la navigation, en fonction de la nouvelle position détectée, dans le but de proposer une ou plusieurs manoeuvres et instructions permettant soit de rejoindre l'itinéraire prévu, soit de recalculer un nouvel itinéraire. Dans un autre cas, pour la préparation d'un itinéraire en vue de l'étudier avant le départ, les calculs sont effectués préalablement à la navigation et les données sont mises en attente.

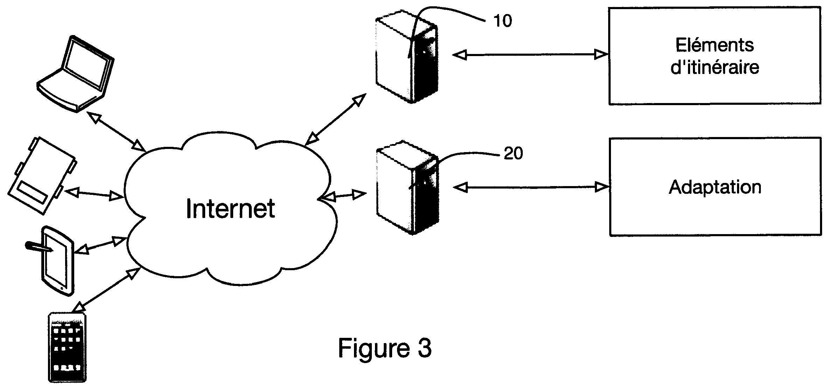

Le module 10 d'itinéraire peut être prévu de façon externe au système 1 de génération de carte d'itinéraire, soit à proximité l'un de l'autre, avec connexion directe, soit à distance l'un de l'autre, avec les moyens de connexion de type connus tels que Wifi, Wimax, par un réseau, tel qu'Internet ou un réseau de téléphonie cellulaire, etc. Selon une autre variante de réalisation, tel que montré à la figure 3, un module d'itinéraire 10 peut être commun à une pluralité d'utilisateurs utilisant des dispositifs d'affichage à distance, de type portable, comme des téléphones dits « Smartphones », PDA, dispositifs de guidage de type GPS ou autre, ordinateurs portables ou de type tablette, etc, ou fixe, tel qu'un ordinateur de bureau.

Selon d'autres variantes de réalisation, le module de calcul d'itinéraire 11, et/ou le module de détection de manoeuvre 14 et/ou le module de détermination d'instructions 17 sont séparés ou à distance, et reliés par des moyens de communications ou de connexion usuels, tel qu'évoqués précédemment. Selon encore une autre variante, les modules de calcul d'itinéraire 11, le module de détection de manoeuvre 14, et le module de détermination d'instructions 17 peuvent aussi être combinés en un seul ou deux modules.

Le module de préparation 20 comporte un module navigation 21, pourvu de moyens de calculs tel qu'un microprocesseur 22 et d'une mémoire de travail 23, un module carte 24, pourvu de moyens de calculs tel qu'un microprocesseur 25 et d'une mémoire de travail 26, et d'un module instructions 27, pourvu de moyens de calculs tel qu'un microprocesseur 28 et d'une mémoire de travail 29. Selon diverses variantes de réalisation, les moyens de calcul 22, 25 et 28, tout comme les mémoires de travail 23, 26 et 29 peuvent être centralisés pour tous les modules 21, 24 et 27, pour l'ensemble du dispositif de navigation 1, ou encore être agencés de façon externe, avec connexion aux différents modules.

Le module navigation 21 est prévu pour effectuer le traitement des données cartographiques en vue de générer et de mettre à disposition de l'utilisateur le mode navigation. Ce mode est décrit plus en détails dans les paragraphes suivants.

Le module carte 24 est prévu pour effectuer le traitement des données cartographiques en vue de générer et de mettre à disposition de l'utilisateur le mode cartographique. Ce mode est décrit plus en détails dans les paragraphes suivants.

Le module instructions 27 est prévu pour effectuer le traitement des données cartographiques en vue de générer et de mettre à disposition de l'utilisateur le mode instructions. Ce mode est décrit plus en détails dans les paragraphes suivants.

Le module de préparation 20 peut être prévu de façon externe au système 1 de génération de carte d'itinéraire, soit à proximité l'un de l'autre, avec connexion directe, soit à distance l'un de l'autre, avec les moyens de connexion de type connus tels que Wifi, Wimax, par un réseau, tel qu'Internet ou un réseau de téléphonie cellulaire, etc. Selon une autre variante de réalisation, tel que montré à la figure 3, un module de préparation 20 peut être commun à une pluralité d'utilisateurs utilisant des dispositifs d'affichage à distance, de type portable, comme des téléphones dits « Smartphones », PDA, dispositifs de guidage de type GPS ou autre, ordinateurs portables ou de type tablette, etc, ou fixe, tel qu'un ordinateur de bureau.

Un module de guidage 30, est prévu pour effectuer une corrélation dynamique entre les modes de guidage traités et le déplacement du véhicule le long de l'itinéraire prévu. Pour ce faire, le module de guidage comporte un élément de géolocalisation 31, pourvu de moyens de calculs tel qu'un microprocesseur 33 et d'une mémoire de travail 34, et permettant d'obtenir la position du véhicule à l'arrêt et lors du déplacement de ce dernier. La plupart du temps, par exemple avec la réception des données de position par un système de type GPS, la position obtenue est en latitude et longitude. Un élément d'appariement 32, pourvu de moyens de calculs tel qu'un microprocesseur 36 et d'une mémoire de travail 37 permet de relier les données de géolocalistaion reçues aux données cartographiques routières. Enfin, l'élément de simulation 35 permet de générer une simulation du déplacement du véhicule le long du trajet. Une telle simulation permet à l'utilisateur de bien prendre connaissance de l'itinéraire, en tout confort et en toute sécurité, avant d'effectuer ce dernier à bord du véhicule prévu. Cette prise de connaissance à priori est très utile pour déceler d'éventuels changements que l'utilisateur aimerait éventuellement apporter à l'itinéraire prévu. L'utilisateur peut alors faire en sorte que les changements ou améliorations qu'il souhaite soient pris en compte pour l'itinéraire réel. Selon le cas, la simulation peut être automatique, ou manuelle. Dans ce dernier cas, c'est l'utilisateur qui actionne le déplacement virtuel du véhicule le long de l'itinéraire.

La mise en oeuvre des différents modules préalablement décrits (par exemple les modules 10, 11, 14, 17, 20, 21, 24, 27, 30, 31, 32 et 35) est avantageusement réalisée au moyen d'instructions de mise en oeuvre, permettant aux modules d'effectuer la ou les opérations spécifiquement prévues pour le module concerné. Les instructions peuvent être sous la forme d'un ou plusieurs logiciels ou modules de logiciels mis en oeuvre par un ou plusieurs microprocesseurs. Le ou les modules et/ou le ou les logiciels sont avantageusement prévus dans un produit programme d'ordinateur comprenant un support d'enregistrement ou medium d'enregistrement utilisable par un ordinateur et comportant un code programmé lisible par un ordinateur intégré dans ledit support ou medium, permettant à un logiciel applicatif son exécution sur un ordinateur ou autre dispositif comportant un microprocesseur tel qu'un dispositif de géolocalisation.

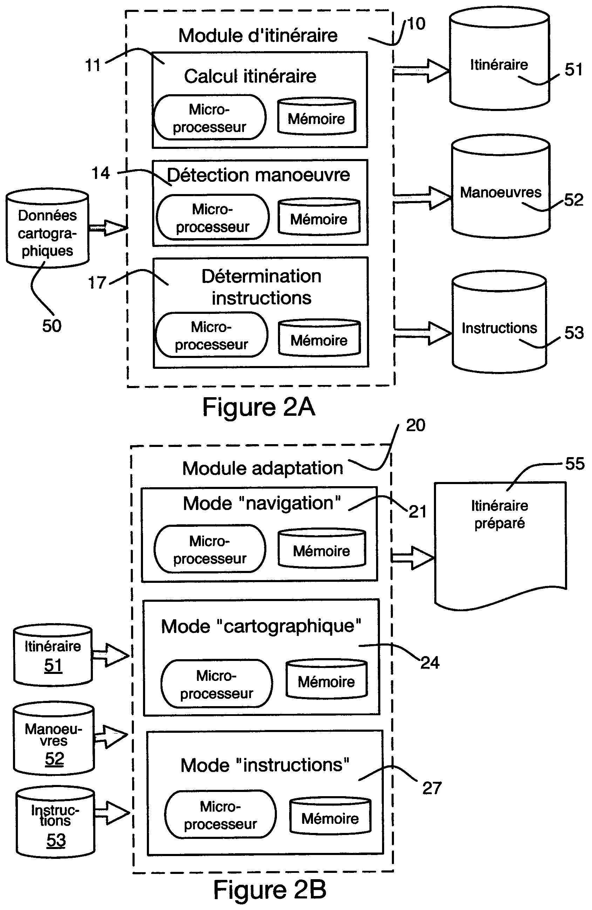

Les figures 2A et 2B illustrent de façon schématique les principales fonctions du module d'itinéraire 10 et du module de préparation 20. A la figure 2A, on remarque que les données cartographiques brutes 50 sont traitées par le module d'itinéraire 10 pour obtenir les données de l'itinéraire 51 à effectuer, les données des manoeuvres 52 correspondantes, et les données des instructions 53 associées à ces manoeuvres. A la figure 2B, on observe le module de préparation 20 qui, à partir des données de l'itinéraire 51, des manoeuvres 52 et des instructions 53, permet d'obtenir un itinéraire préparé 55, offrant une pluralité de modes de guidages complémentaires et distincts, actionnables à la demande de l'utilisateur.

La figure 4 présente, de façon successive, les principales étapes du procédé selon l'invention. D'une part, aux étapes 101 à 103, les données 51 en relation avec l'itinéraire sont calculées. D'autre part, aux étapes 104, 200, 300 et 400, les données de l'itinéraire sont préparées ou formatées selon une pluralité de modes de guidage distincts et complémentaires quand au contenu mis à disposition. En outre, au moins deux modes de guidage proposent des contenus cartographiques complémentaires, à savoir, une représentation à sensiblement grande échelle pour un mode navigation 200, qui présente prioritairement la manoeuvre en cours et/ou la prochaine manoeuvre, et une représentation à plus petite échelle pour un mode cartographique 300, qui présente une zone plus vaste, permettant de situer le véhicule le long de l'itinéraire. La position ou distance du véhicule par rapport aux manoeuvres affichées est de préférence aussi indiquée.

De façon plus détaillée, à l'étape 101, après réception par un module d'itinéraire 11 des données cartographiques digitales des tronçons et des noeuds permettant de reconstituer une représentation de l'itinéraire calculé, les manoeuvres à effectuer le long de l'itinéraire sont déterminées à l'étape 102 par un module de détermination de manoeuvre 14. Les instructions, notamment écrites, concernant les manoeuvres identifiées sont par ailleurs identifiées à l'étape 103 par un module de détermination d'instructions 17. On obtient ainsi des couples d'éléments d'itinéraires, constitués d'une part, des instructions écrites permettant d'expliquer au conducteur les manoeuvres à effectuer tout au long de l'itinéraire, et d'autre part, des manoeuvres correspondantes, pour affichage sous forme schématique.

Les données en relation avec le meilleur chemin à parcourir pour constituer l'itinéraire entre les points de départ et d'arrivée peuvent être calculées préalablement à l'étape 101 par le module d'itinéraire 10 ou par tout autre dispositif ou système de détermination d'itinéraire. Selon une variante de réalisation, elles peuvent être calculées par le module d'itinéraire 10 lors de l'étape 101.

Il en est de même pour les données relatives aux manoeuvres 52 et aux instructions 53, qui peuvent être obtenues préalablement à la mise en oeuvre du procédé, ou au cours des premières étapes de celui-ci.

A l'étape 500, l'utilisateur est guidé le long de l'itinéraire en référence avec l'un des modes de guidage pré-établi et mis à disposition. L'utilisateur choisi le mode le plus adapté en fonction des données qu'il souhaite voir mises en évidence. Par exemple, il sélectionne le mode cartographique 300 pour avoir une vue d'ensemble sur un secteur d'itinéraire, et/ou sur l'itinéraire de façon globale, ou pour visualiser les portions d'itinéraires effectuées et restantes.

Pour faciliter sa conduite lorsqu'il parcours le trajet de l'itinéraire, il peut sélectionner le mode navigation 200, ou le mode instructions 400, qui permettent de bien préparer la prochaine manoeuvre à effectuer.

L'utilisateur peut aisément passer d'un mode à l'autre grâce à des boutons de commandes prévus sur le dispositif de navigation 1 et/ou à l'aide de menu proposés sur un écran tactile lorsque le dispositif de navigation comporte un tel type d'écran.

### LES TROIS MODES DE GUIDAGE

Les trois modes de guidage préférentiels selon l'invention sont :
- le mode navigation (avec vue de dessus ou vue 3D) ;
- le mode cartographique (comportant de préférence le tracé de l'itinéraire sur un ensemble de cartes à différentes échelles) ;
- le format instructions (avec des instructions écrites ou schématiques permettant de parcourir l'itinéraire prévu).

Ces trois modes sont traités de façon à pouvoir être mis à la disposition de l'utilisateur, à la demande, et de façon sensiblement instantanée.

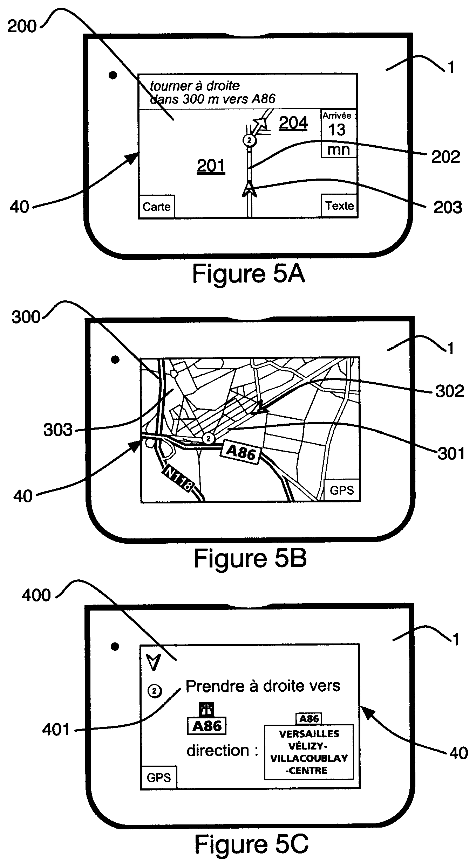

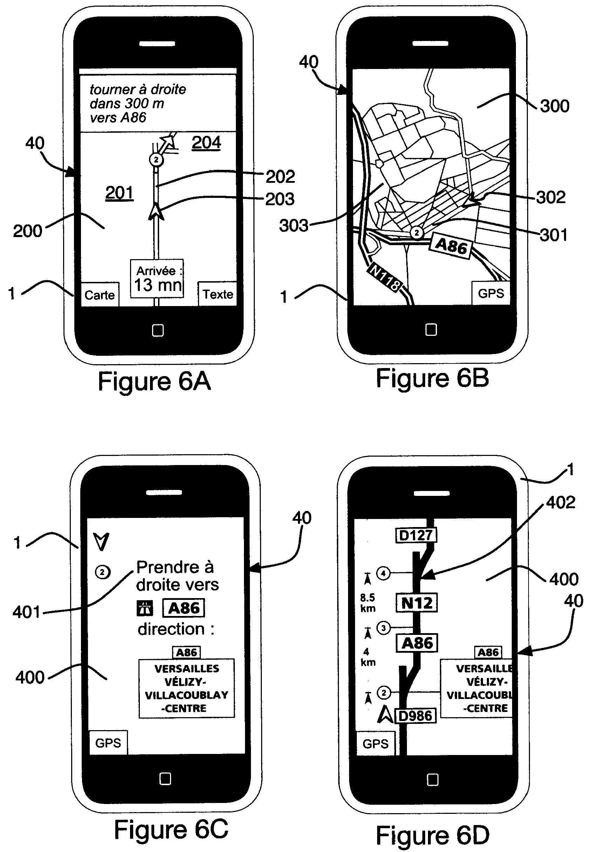

### LE MODE CARTOGRAPHIQUE (Figures 5B et 6B)

Le mode cartographique permet le repérage soit sur une carte dont l'échelle est adaptée, soit de préférence sur un ensemble de cartes de différentes échelles. Il permet une vision d'ensemble et de détail au moyen d'outils d'exploration, pour effectuer des déplacements, des zooms (en + ou -), etc.

Les figures 5B et 6B montrent des exemples de préparation selon le mode cartographique 300. On observe que l'itinéraire à parcourir est indiqué par un trait particulier appliqué sur la route de l'itinéraire. Ce trait est appliqué sur une carte routière classique, comportant tous les détails usuels tels que les noms de lieu, et parfois les numéros des routes principales. Une telle carte permet à l'utilisateur de bien se repérer, de façon macroscopique, avec une mise à disposition de données ne se limitant pas seulement à la manoeuvre en cours ou à la prochaine manoeuvre, mais en regard d'une pluralité de manoeuvres, ou plus particulièrement, à une échelle sensiblement plus petite que dans le mode navigation. L'utilisateur peut alors se repérer par rapport à l'itinéraire et/ou par rapport à des points de repères spatiaux plus efficaces que les manoeuvres.

On retrouve les informations cartographiques d'une part de l'environnement immédiat du secteur où se trouve le véhicule, mais en plus, selon la longueur de l'itinéraire à effectuer, soit les informations concernant l'environnement intermédiaire pour un itinéraire très long qui est alors représenté partiellement, soit les informations concernant l'environnement global dans le cas d'un itinéraire plus court, représenté dans sa globalité. La représentation symbolique du véhicule 302 est avantageusement placée dans une portion sensiblement centrale de la représentation 300. L'itinéraire à suivre 301 est représenté par exemple par une mise en évidence des tronçons concernés affichés avec une teinte ou coloration distincte, ou par tout autre moyen. Lors des déplacements du véhicule, le mode cartographique est dynamique : soit la représentation symbolique, soit le fond cartographique, soit les deux simultanément ou successivement, se déplacent de façon à reproduire le déplacement du véhicule. Contrairement au mode navigation, où de courtes distances sont représentées, ce qui engendre un effet de mobilité plus rapide des éléments du secteur actif pour une même vitesse donnée, le mode cartographique produit un effet de déplacement relatif plus faible. De manière avantageuse, le fond cartographique est orienté de sorte que le Nord se trouve vers le haut de l'affichage. Une zone tampon 303, de 10 km, 20km, 30 km ou même plus, avant et ou après la représentation symbolique du véhicule 301, est également prévue. La zone tampon 303 peut aussi être délimitée en fonction d'un pourcentage de la longueur de l'itinéraire global.

### LE MODE INSTRUCTIONS (Figures 5C, 6C et 6D)

Le mode instructions 400 regroupe l'ensemble des données de guidage, prenant avantageusement la forme d'instructions écrites 401, comme par exemple : « tourner à droite », « tourner à gauche », « suivre la direction de XXX », etc, tel que montré dans les exemples des Figures 5C et 6C. Elle peut contenir aussi des repères de réassurance, et des informations utiles pour le déplacement : restauration, stations-services, hôtellerie, points touristiques sur la route ou méritant le détour. La forme textuelle décrit chaque action dans une liste.
Dans l'exemple de la Figure 6D, des instructions schématiques 402 montrent à l'aide de graphes explicatifs les manoeuvres en cours et/ou à venir. Les graphes sont prévus de façon à présenter au mieux l'ensemble des données essentielles pour suivre l'itinéraire de façon sûre et efficace, avec un minimum de risque d'erreur d'interprétation des instructions. Les graphes forment une représentation schématique expliquant la construction géométrique détaillée du point d'instruction PI concerné. La forme schématique permet de visualiser les instructions plutôt que de les lire.

### LE MODE NAVIGATION (Figures 5A et 6A)

Les figures 5A et 6A illustrent différents exemples montrant des représentations en mode navigation. Un premier secteur ou une première fenêtre, désigné ici secteur actif 201 est consacré à une représentation du tronçon actif 202, sur lequel le véhicule est localisé ou positionné grâce à une représentation symbolique 203. Le secteur actif reproduit virtuellement la mobilité du véhicule dans son environnement sensiblement immédiat. Le tronçon actif est de préférence représenté entouré de son environnement immédiat 204. En pratique, il est avantageux de représenter le secteur actif de façon à montrer la route que l'utilisateur va parcourir dans les toutes prochaines secondes (ou minutes en cas de vitesse très lente). Le secteur actif 201 est de préférence prévu de sorte que le véhicule soit avantageusement représenté dans la portion centrale inférieure de la zone d'affichage, la route à parcourir étant préférentiellement représentée pour que le déplacement soit sensiblement vers le haut de l'affichage. Lors de l'avancement du véhicule, du fait du guidage en temps réel, les différents éléments cartographiques affichés se déplacent avantageusement vers le bas de la zone d'affichage, simulant de ce fait l'avancement du véhicule dans le sens inverse. Lors d'un changement de direction du véhicule, les éléments cartographiques illustrés sont préférentiellement réagencés de façon à continuer à représenter le véhicule dans la même zone, simulant un déplacement vers le haut de la zone d'affichage. Bien sûr, selon diverses variantes, le déplacement virtuel du véhicule vers le haut de l'écran peut être remplacé par d'autres orientations, comme par exemple des déplacements vers le bas, à gauche ou à droite.

Le secteur actif 201 peut être représenté en deux ou trois dimensions, selon les variantes disponibles et les éventuelles préférences de l'utilisateur. L'environnement immédiat 204 comporte les éventuels segments routiers adjacents et/ou voisions à la zone du tronçon actif. Les noms et/ou numéros des tronçons peuvent aussi être affichés. De manière avantageuse, le secteur actif 201 présente un secteur géographique pouvant aller de quelques dizaines de mètres, comme par exemple 10, 20, 50 ou 100 m, à quelques km, comme par exemple 1, 2, 5 ou 10 km.

On comprend donc que le secteur actif 201 vise à situer l'utilisateur dans son environnement immédiat lors du déplacement du véhicule. A cette fin, ce secteur reproduit virtuellement la mobilité du véhicule dans cet environnement, de préférence en utilisant un fond cartographique mobile ou déroulant. L'élément 203 de représentation symbolique du véhicule peut aussi se déplacer et/ou tourner, pour ajouter au réalisme de la représentation du déplacement.

La compréhension d'une vue en mode navigation par un conducteur de véhicule est souvent difficile dans la mesure où l'écran de guidage représente une vue d'avion, plutôt qu'une vue depuis le véhicule effectuant le trajet. L'espace, présenté en vue de dessus ou en perspective s'étend bien au-delà de ce que peut voir un automobiliste au volant de son véhicule. Des données d'information utiles sont donc noyées dans une quantité souvent importante des données inutiles ou peu utiles en regard de la fonction relative au guidage en tant que tel. Cette vue est fortement améliorée lorsque les données inutiles sont élaguées. Pour ce faire, on prévoit avantageusement une étape d'extraction de l'itinéraire du reste des données cartographiques. L'extraction consiste à conserver au minimum les tronçons identifiés pour la réalisation de l'itinéraire. Les autres tronçons de la carte routière, le fond cartographique, les autres données ainsi que le format de la carte routière, sont de préférence non représentés.

Le fait de n'utiliser que les tronçons directement utiles plutôt qu'une représentation cartographique détaillée classique sur laquelle l'itinéraire est surligné confère une très grande souplesse pour configurer et formater la manoeuvre à afficher.

Dans une variante de réalisation, la représentation schématique de la manoeuvre comporte en plus d'autres tronçons, par exemple des tronçons directement connectés à ceux de l'itinéraire prévu, ou des tronçons importants, susceptibles de servir de repères ou références pour faciliter le suivi de l'itinéraire. On représente aussi avantageusement les tronçons où des manoeuvres à venir sont prévues.

Selon une variante avantageuse du mode navigation, une autre zone de l'écran, désignée ici secteur explicatif 205 ou zone de représentation schématique, est prévue, dans laquelle la prochaine manoeuvre à effectuer est présentée au moyen d'une représentation très complète et détaillée de la trajectoire à suivre par le véhicule lors de la réalisation de cette manoeuvre. Le secteur explicatif 205 représente de façon fixe, tant que le véhicule n'a pas franchi le prochain point d'instruction PI affiché, une représentation schématique expliquant la construction géométrique détaillée de ce point d'instruction PI. Cette construction géométrique est reproduite à partir des données cartographiques digitalisées fournies soit avec l'itinéraire donné, soit à partir de données mémorisées ou stockées sur un support mémoire.

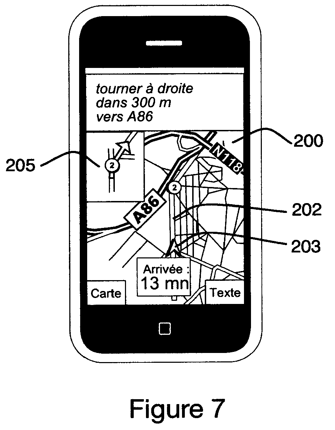

De préférence, ce secteur 205 comporte uniquement les éléments nécessaires à l'explication de la prochaine manoeuvre ou point d'instruction. Les éléments de l'environnement qui ne servent pas à expliquer cette portion de parcours sont de préférence non représentés. Par exemple, à la figure 7, il s'agit de tourner à droite à l'intersection. Comme on le voit dans cet exemple, une portion d'itinéraire très restreinte est représentée dans ce secteur, ce qui permet d'avoir un niveau de détail supérieur à celui du secteur actif du mode navigation. L'utilisateur peut ainsi bien comprendre et visualiser le prochain point d'instruction PI et mieux anticiper la manoeuvre correspondante.

De préférence, la représentation schématique du secteur est orientée dans une direction sensiblement correspondante à celle présentée (ou à venir) dans le secteur actif 201. Les indications des deux fenêtres sont alors homogènes.

Pour faciliter le passage d'un mode à l'autre, les modes sont arrangés selon un triptyque virtuel. Par exemple au centre virtuel de ce triptyque se trouve le mode navigation. Sur l'un des côtés se trouve le mode cartographique et sur l'autre côté le mode instructions.

En option, le mode simulation de navigation, disponible pour au moins deux des trois modes, est un mode particulièrement utile pour l'utilisateur qui souhaite « comprendre » l'ensemble de l'itinéraire. Cela est d'autant plus vrai s'il est possible d'accélérer et ralentir à volonté cette simulation. Aux mains d'un copilote, cette simulation commandée peut même servir pour effectuer un guidage sans dispositif ou moyen de géolocalisation.

Les figures 6A, 6B, 6C et 6D représentent aussi les trois modes préalablement décrits, mais à partir d'un dispositif de guidage 600 en format portrait, plutôt qu'en format paysage comme aux figures 5A, 5B et 5C.

Les Figures et leurs descriptions faites ci-dessus illustrent l'invention plutôt qu'elles ne la limitent. En particulier, l'invention et ses différentes variantes viennent d'être décrites en relation avec une alternance possible entre trois modes, en fonction de la sélection effectuée par l'utilisateur.

Les signes de références dans les revendications n'ont aucun caractère limitatif. Les verbes « comprendre » et « comporter » n'excluent pas la présence d'autres éléments que ceux listés dans les revendications. Le mot « un » précédant un élément n'exclut pas la présence d'une pluralité de tels éléments.

## Revendications

1. Procédé de navigation pour dispositif de navigation mobile, permettant d'effectuer une navigation le long d'un itinéraire comportant un point de départ, un point d'arrivée et une pluralité de manoeuvres, comportant les étapes suivantes :
- recevoir les données informatisées d'un itinéraire à effectuer avec les tronçons correspondants (101) ;
- obtenir les données informatisées des manoeuvres à effectuer le long de l'itinéraire (102);
- obtenir les données informatisées des instructions correspondant aux manoeuvres (103) ;
- obtenir les données informatisées de position actuelle de l'objet guidé ;
- mettre en relation les données informatisées de position actuelle de l'objet guidé (400) par rapport aux données cartographiques routières informatisées concernant l'itinéraire ,
les données informatisées de l'itinéraire étant prétraitrées à l'aide d'un module d'adaptation (20) selon une pluralité de modes de guidage :
- un mode navigation (200), apte à générer une représentation cartographique routière visuelle d'un secteur actif (201) comportant au moins le tronçon actif (202), une représentation de l'objet guidé (203) effectuant l'itinéraire, et une éventuelle manoeuvre en cours ou à proximité immédiate ;
- un mode cartographique (300), apte à générer une représentation cartographique routière des éléments d'itinéraire fournis comportant une représentation de l'objet guidé (302) effectuant l'itinéraire et une zone tampon (303) avant et/ou après la représentation de l'objet guidé ;
- un mode instructions écrites (400), permettant de fournir une instruction écrite de guidage pour une manoeuvre en cours et/ou une prochaine manoeuvre ;
le procédé comportant par ailleurs les étapes consistant à :
- effectuer, à l'aide d'un module de guidage (30), un guidage le long de l'itinéraire en référence avec l'un des modes de guidage prétraités et mettre en attente les autres modes de guidage prétraités ;
- permettre une activation sensiblement immédiate des modes de guidage prétraités mis en attente.
**caractérisé en ce qu'**il comporte également une étape d'extraction de l'itinéraire du reste des données cartographiques permettant, pour le mode navigation (200), de conserver uniquement les tronçons identifiés pour la réalisation de l'itinéraire ;
**en ce que**, en mode cartographique (300), la reproduction cartographique comprend une mise en évidence de l'itinéraire ;
et **en ce que**, le mode instructions écrites (400) comporte des instructions schématiques (402) montrant à l'aide de graphes explicatifs les manoeuvres en cours et/ou à venir, les graphes formant une représentation schématique expliquant la construction géométrique détaillée d'un point d'instruction (PI) associé à une instruction écrite.

2. Procédé de navigation selon la revendication 1, dans lequel le mode navigation (200), comporte également une représentation cartographique visuelle de l'environnement immédiat (204) dans lequel se trouve l'objet guidé.

3. Procédé de navigation selon l'une des revendication 1 ou 2, dans lequel les données informatisées de la position de l'objet guidé le long de l'itinéraire sont fournies par un système de géolocalisation.

4. Procédé de navigation selon l'une des revendications 1 ou 2, dans lequel la position de l'objet guidé le long de l'itinéraire est fournie par simulation.

5. Procédé de navigation selon l'une des revendications 1 à 4, dans lequel des étapes consistant à :
- déterminer les données informatiques des manoeuvres permettant d'effectuer l'itinéraire (102) ;
- déterminer les données informatiques d'instructions correspondant aux manoeuvres à effectuer (103) ;
sont effectuées en amont du procédé.

6. Dispositif de navigation pour la mise en oeuvre du procédé selon l'une des revendications 1 à 5 comportant au moins un microprocesseur et au moins une mémoire de travail, et comprenant par ailleurs :
• un module d'itinéraire (10), permettant de déterminer, à l'aide de données cartographiques informatisées, un itinéraire entre un point de départ et un point d'arrivée;
• un module de guidage (30), permettant de déterminer, à l'aide de données informatisées concernant la position de l'objet guidé et de données cartographiques informatisées concernant l'itinéraire prévu, au moins une instruction ou manoeuvre permettant à l'utilisateur d'être guidé le long de l'itinéraire ;
• un module d'affichage (40), permettant d'afficher une représentation visuelle selon le mode de guidage sélectionné par l'utilisateur ;
• un module d'adaptation (20), permettant de traiter les données cartographiques informatisées de l'itinéraire à effectuer en vue de les adapter à une pluralité de modes de guidage susceptibles d'être utilisés ;
**caractérisé en ce que** le module d'adaptation (20) comporte :
• un module de mode navigation (21), pour effectuer le traitement des données cartographiques informatisées en vue de générer et de mettre à disposition de l'utilisateur un mode navigation, apte à générer une représentation cartographique routière visuelle d'un secteur actif (201) comportant le tronçon actif (202), une représentation de l'objet guidé (203) effectuant l'itinéraire, et une éventuelle manoeuvre en cours ou à proximité immédiate ;
• un module de mode cartographique (24), pour effectuer le traitement des données cartographiques informatisées en vue de générer et de mettre à disposition de l'utilisateur un mode cartographique, apte à générer une représentation cartographique routière des éléments d'itinéraire fournis comportant une représentation de l'objet guidé (302) effectuant l'itinéraire, une zone tampon (303) avant et/ou après la représentation de l'objet guidé, et une mise en évidence de l'itinéraire;
et un module de mode instructions, pour effectuer le traitement des données cartographiques informatisées en vue de générer et de mettre à disposition de l'utilisateur un mode instructions comportant des instructions schématiques (402) montrant à l'aide de graphes explicatifs les manoeuvres en cours et/ou à venir, les graphes formant une représentation schématique expliquant la construction géométrique détaillée d'un point d'instruction (PI) associé à une instruction écrite.

7. Dispositif de navigation selon la revendication 6, dans lequel le module de guidage (30) comporte un module de simulation (35), permettant de simuler le déplacement de l'objet guidé le long de l'itinéraire.

8. Dispositif de navigation selon l'une des revendications 6 ou 7, dans lequel le module de guidage (30) comporte un module de géolocalisation (31), permettant d'obtenir les données informatisées de la position de l'objet guidé et un module d'appariement (32), permettant de reporter cette position sur la représentation cartographique routière.

9. Dispositif de navigation selon l'une des revendications 6 à 8, dans lequel le module d'itinéraire (10) comprend :
• un module de calcul d'itinéraire (11), pour déterminer, à l'aide de données cartographiques informatisées, un itinéraire permettant de se déplacer entre un point de départ et un point d'arrivée ;
• un module de détection de manoeuvre (14), pour déterminer, à l'aide de données cartographiques informatisées concernant l'itinéraire prévu, les manoeuvres à effectuer pour parcourir l'itinéraire ;
• un module de déterminations d'instructions (17), pour fournir les instructions correspondant à chacune des manoeuvres.

## Patentansprüche

1. Navigationsverfahren für mobile Navigationsvorrichtung, das ermöglicht, eine Navigation längs eines Weges, der einen Ausgangspunkt, einen Ankunftspunkt und mehrere Manöver enthält, auszuführen, das die folgenden Schritte umfasst:
- Empfangen der computerisierten Daten eines mit den entsprechenden Teilstücken (101) auszuführenden Wegs;
- Erhalten der computerisierten Daten der auszuführenden Manöver längs des Wegs (102);
- Erhalten der computerisierten Daten von Befehlen, die den Manövern (103) entsprechen;
- Erhalten der computerisierten Daten der aktuellen Position des geführten Objekts;
- Herstellen einer Beziehung zwischen den computerisierten Daten der aktuellen Position des geführten Objekts (400) und computerisierten kartographischen Straßendaten, die den Weg betreffen, wobei die computerisierten Daten des Weges im Voraus mit Hilfe eines Anpassungsmoduls (20) gemäß einer von mehreren Führungsbetriebsarten verarbeitet werden:
∘ einer Navigationsbetriebsart (200), die eine visuelle kartographische Straßendarstellung eines aktiven Sektors (201) erzeugen kann, die wenigstens das aktive Teilstück (202), eine Darstellung des geführten Objekts (203), das den Weg befolgt, und ein eventuelles ablaufendes oder unmittelbar bevorstehendes Manöver enthält;
∘ einer kartographischen Betriebsart (300), die eine kartographische Straßendarstellung der gelieferten Wegelemente erzeugen kann, die eine Darstellung des geführten Objekts (302), das den Weg befolgt, und eine Pufferzone (303) vor und/oder nach der Darstellung des geführten Objekts enthält;
∘ einer Betriebsart (400) geschriebener Befehle, die ermöglicht, einen geschriebenen Führungsbefehl für ein ablaufendes Manöver und/oder ein nächstes Manöver zu liefern;
wobei das Verfahren außerdem die Schritte umfasst, die darin bestehen:
- mit Hilfe eines Führungsmoduls (30) eine Führung längs des Referenzweges mit einer der vorverarbeiteten Führungsbetriebsarten auszuführen und die anderen vorverarbeiteten Führungsbetriebsarten in einen Wartezustand zu bringen;
- eine im Wesentlichen sofortige Aktivierung der im Wartezustand befindlichen Vorverarbeitungsbetriebsarten zu ermöglichen,
**dadurch gekennzeichnet, dass** es außerdem einen Schritt des Extrahierens des Weges der restlichen kartographischen Daten umfasst, der ermöglicht, für die Navigationsbetriebsart (200) ausschließlich die für die Verwirklichung des Weges identifizierten Teilstücke aufzubewahren,
dass in der kartographischen Betriebsart (300) die kartographische Wiedergabe eine Hervorhebung des Weges umfasst;
und dass die Betriebsart (400) geschriebener Befehle schematische Befehle (402) umfasst, die mit Hilfe erläuternder Graphen die ablaufenden und/oder künftigen Manöver zeigen, wobei die Graphen eine schematische Darstellung bilden, die die genaue geometrische Konstruktion eines einem geschriebenen Befehl zugeordneten Befehlspunkts (PI) erläutert.

2. Navigationsverfahren nach Anspruch 1, wobei die Navigationsbetriebsart (200) außerdem eine visuelle kartographische Darstellung der unmittelbaren Umgebung (204), in der sich das geführte Objekt befindet, umfasst.

3. Navigationsverfahren nach einem der Ansprüche 1 oder 2, wobei die computerisierten Daten der Position des geführten Objekts längs des Weges von einem Geolokalisierungssystem geliefert werden.

4. Navigationsverfahren nach einem der Ansprüche 1 oder 2, wobei die Position des geführten Objekts längs des Weges durch Simulation geliefert wird.

5. Navigationsverfahren nach einem der Ansprüche 1 bis 4, wobei die Schritte, die darin bestehen:
- die computerisierten Daten der Manöver, die die Ausführung des Weges (102) ermöglichen, zu bestimmen; und
- die computerisierten Daten von Befehlen, die den auszuführenden Manövern (103) entsprechen, zu bestimmen,
vor dem Verfahren ausgeführt werden.

6. Navigationsvorrichtung für die Ausführung des Verfahrens nach einem der Ansprüche 1 bis 5, die wenigstens einen Mikroprozessor und wenigstens einen Arbeitsspeicher umfasst und außerdem Folgendes umfasst:
• ein Wegemodul (10), das ermöglicht, mit Hilfe computerisierter kartographischer Daten einen Weg zwischen einem Ausgangspunkt und einem Ankunftspunkt zu bestimmen;
• ein Führungsmodul (30), das ermöglicht, mit Hilfe computerisierter Daten, die die Position des geführten Objekts betreffen, und computerisierter kartographischer Daten, die den vorgesehenen Weg betreffen, wenigstens einen Befehl oder ein Manöver zu bestimmen, der bzw. das dem Anwender ermöglicht, längs des Weges geführt zu werden;
• ein Anzeigemodul (40), das ermöglicht, eine visuelle Darstellung gemäß der von dem Anwender gewählten Führungsbetriebsart anzuzeigen;
• ein Anpassungsmodul (20), das ermöglicht, die computerisierten kartographischen Daten des auszuführenden Weges zu verarbeiten, um sie an mehrere Führungsbetriebsarten anzupassen, die für die Verwendung geeignet sind;
**dadurch gekennzeichnet, dass** das Anpassungsmodul (20) Folgendes umfasst:
• ein Navigationsbetriebsart-Modul (21), um die Verarbeitung der computerisierten kartographischen Daten auszuführen, um eine Navigationsbetriebsart zu erzeugen und dem Anwender zur Verfügung zu stellen, die eine visuelle kartographische Straßendarstellung eines aktiven Sektors (201) erzeugen kann, der das aktive Teilstück (202), eine Darstellung des geführten Objekts (203), das den Weg befolgt, und ein eventuelles ablaufendes oder unmittelbar bevorstehendes Manöver enthält;
• ein Modul (24) für kartographische Betriebsart, um die Verarbeitung der computerisierten kartographischen Daten auszuführen, um eine kartographische Betriebsart zu erzeugen und dem Anwender zur Verfügung zu stellen, die eine kartographische Straßendarstellung der gelieferten Wegelemente erzeugen kann, die eine Darstellung des geführten Objekts (302), das den Weg befolgt, eine Pufferzone (303) vor und/oder nach der Darstellung des geführten Objekts und eine Hervorhebung des Weges enthält;
• und ein Modul für eine Befehlsbetriebsart, um die Verarbeitung der computerisierten kartographischen Daten auszuführen, um eine Befehlsbetriebsart zu erzeugen und dem Anwender zur Verfügung zu stellen, die schematische Befehle (402) enthält, die mit Hilfe erläuternder Graphen die ablaufenden und/oder künftigen Manöver zeigen, wobei die Graphen eine schematische Darstellung bilden, die die genaue geometrische Konstruktion eines einem geschriebenen Befehl zugeordneten Befehlspunkts (PI) erläutert.

7. Navigationsvorrichtung nach Anspruch 6, wobei das Führungsmodul (30) ein Simulationsmodul (35) umfasst, das ermöglicht, die Verlagerung des geführten Objekts längs des Weges zu simulieren.

8. Navigationsvorrichtung nach einem der Ansprüche 6 oder 7, wobei das Führungsmodul (30) ein Geolokalisierungsmodul (31) umfasst, das ermöglicht, die computerisierten Daten der Position des geführten Objekts zu erhalten, und ein Zusammenführungsmodul (32) umfasst, das ermöglicht, diese Position auf der kartographischen Straßendarstellung anzuzeigen.

9. Navigationsvorrichtung nach einem der Ansprüche 6 bis 8, wobei das Wegemodul (10) Folgendes umfasst:
- ein Wegberechnungsmodul (11), um mit Hilfe computerisierter kartographischer Daten einen Weg zu bestimmen, der ermöglicht, sich zwischen einem Ausgangspunkt und einen Ankunftspunkt zu verlagern;
- ein Manöverdetektionsmodul (14), um mit Hilfe computerisierter kartographischer Daten, die den vorgesehenen Weg betreffen, die Manöver zu bestimmen, die zum Durchlaufen des Wegs auszuführen sind;
- ein Befehlsbestimmungsmodul (17), um die jedem der Manöver entsprechenden Befehle zu liefern.

## Claims

1. Navigating method for a mobile navigating device, allowing an itinerary including a departure point, an arrival point and a plurality of manoeuvres to be navigated, said method including the following steps:
- receiving (101) the computerized data of an itinerary to be followed with the corresponding sections;
- obtaining (102) the computerized data of the manoeuvres to be carried out along the itinerary;
- obtaining (103) the computerized data of the instructions corresponding to the manoeuvres;
- obtaining the computerized actual-position data of the guided object;
- relating the computerized actual-position data of the guided object (400) to computerized road cartographic data concerning the itinerary, the computerized data of the itinerary being pre-processed, using an adapting module (20), according to a plurality of guiding modes:
- a navigating mode (200), able to generate a visual road cartographic representation of an active sector (201) including at least the active section (202), a representation of the guided object (203) following the itinerary, and a possible manoeuvre under way or in immediate proximity;
- a cartographic mode (300), able to generate a road cartographic representation of the delivered itinerary elements including a representation of the guided object (302) following the itinerary and a buffer zone (303) before and/or after the representation of the guided object; and
- a written instructions mode (400), allowing a written guiding instruction to be delivered for a manoeuvre under way and/or a succeeding manoeuvre;
the method moreover including the steps consisting in:
- providing, using a guiding module (30), guidance along the itinerary by way of one of the pre-processed guiding modes and placing on standby the other pre-processed guiding modes; and
- allowing substantially immediate activation of the pre-processed guiding modes placed on standby; **characterized in that** it also includes a step of extracting the itinerary from the rest of the cartographic data allowing, for the navigating mode (200), only sections identified for the production of the itinerary to be preserved;
and **in that**, in cartographic mode (300), the cartographic reproduction comprises highlighting the itinerary;
and **in that**, the written instructions mode (400) includes schematic instructions (402) showing, using explanatory graphs, the manoeuvres under way and/or to come, the graphs forming a schematic representation explaining the detailed geometric construction of an instruction point (PI) associated with a written instruction.

2. Navigating method according to Claim 1, wherein the navigating mode (200) also includes a visual cartographic representation of the immediate environment (204) in which the guided object is found.

3. Navigating method according to either of Claims 1 and 2, wherein the computerized data of the position of the guided object along the itinerary are delivered by a geo-positioning system.

4. Navigating method according to either of Claims 1 and 2, wherein the position of the guided object along the itinerary is delivered by simulation.

5. Navigating method according to one of Claims 1 to 4, wherein steps consisting in:
- determining (102) the computational data of the manoeuvres allowing the itinerary to be followed;
- determining (103) the computational data of instructions corresponding to the manoeuvres to be performed;
are carried out upstream of the method.

6. Navigating device for implementing the method according to one of Claims 1 to 5 including at least one microprocessor and at least one working memory, and moreover comprising:
• an itinerary module (10), allowing, using computerized cartographic data, an itinerary between a departure point and an arrival point to be determined;
• a guiding module (30), allowing, using computerized data concerning the position of the guided object and computerized cartographic data concerning the expected itinerary, at least one instruction or manoeuvre allowing the user to be guided along the itinerary to be determined;
• a displaying module (40), allowing a visual representation depending on the guiding mode selected by the user to be displayed; and
• an adapting module (20), allowing the computerized cartographic data of the itinerary to be followed to be processed with a view to adapting them to a plurality of guiding modes liable to be used;
**characterized in that** the adapting module (20) includes:
• a navigating-mode module (21), for processing computerized cartographic data with a view to generating and making available to the user a navigating mode, able to generate a visual road cartographic representation of an active sector (201) including the active section (202), a representation of the guided object (203) following the itinerary, and a possible manoeuvre under way or in immediate proximity;
• a cartographic-mode module (24), for processing computerized cartographic data with a view to generating and making available to the user a cartographic mode, able to generate a road cartographic representation of the delivered itinerary elements including a representation of the guided object (302) following the itinerary, a buffer zone (303) before and/or after the representation of the guided object, and highlighted the itinerary; and
• an instructions-mode module, for processing computerized cartographic data with a view to generating and making available to the user an instructions mode including schematic instructions (402) showing using explanatory graphs the manoeuvres under way and/or to come, the graphs forming a schematic representation explaining the detailed geometric construction of an instruction point (PI) associated with a written instruction.

7. Navigating device according to Claim 6, wherein the guiding module (30) includes a simulating module (35), allowing the movement of the guided object along the itinerary to be simulated.

8. Navigating device according to either of Claims 6 and 7, wherein the guiding module (30) includes a geo-positioning module (31), allowing the computerized data of the position of the guided module to be obtained and a matching module (32) allowing this position to be located on the road cartographic representation.

9. Navigating device according to one of Claims 6 to 8, wherein the itinerary module (10) comprises:
• an itinerary-calculating module (11) for determining, using computerized cartographic data, an itinerary allowing travel between a departure point and an arrival point;
• a manoeuvre-detecting module (14) for determining, using computerized cartographic data concerning the expected itinerary, the manoeuvres to be carried out to complete the itinerary; and
• an instruction-determining module (17) for delivering the instructions corresponding to each of the manoeuvres.
